# EUROPEAN PATENT APPLICATION

(11) **EP 4 246 370 A1**
(43) Date of publication of application: **20.09.2023**
(21) Application number: 20961309.0
(22) Date of filing: 20.11.2020
(51) Int. Cl.: G06K 9/00

(54) **IMAGE-BASED WORKING AREA IDENTIFICATION METHOD AND SYSTEM, AND ROBOT**

(30) Priority: 13.11.2020 CN 202011268393
(71) Applicant: Suzhou Cleva Precision Machinery & Technology Co., Ltd., Suzhou, Jiangsu 215000 (CN); Skybest Electric Appliance (Suzhou) Co., Ltd., Suzhou, Jiangsu 215000 (CN)
(72) Inventor: ZHU, Shaoming, Suzhou, Jiangsu 215000 (CN); REN, Xue, Suzhou, Jiangsu 215000 (CN)
(74) Representative: Murgitroyd & Company
(86) International application number: PCT/CN2020/130287
(87) International publication number: WO 2022/099755

(57) **Abstract**

The present invention provides a method and system for recognizing a working area based on an image, and a robot. The method includes: obtaining an original image; separating an H channel image from the original image, collecting statistics on a histogram of the H channel image, and obtaining a first parameter representing a peak value of the histogram; performing binarization processing on the original image to form a first binary image, where the first binary image includes a working area and a non-working area that have different pixel values; collecting statistics on a second parameter representing a size of the non-working area in the first binary image based on the first binary image; and recognizing a working area according to magnitude relations of the first parameter and the second parameter with preset parameter thresholds. The present invention can accurately recognize a working area through image recognition, save costs, and improve operational performance of a robot.

## Description

### Field of the Invention

The present invention relates to the field of intelligent control, in particular to a method and system for recognizing a working area based on an image, and a robot.

### Background of the Invention

Low repetition and high coverage are goals pursued by mobile robots such as traversing robots for dust absorption, mowing and swimming pool cleaning. An intelligent robot mower is used as an example of the mobile robots. The robot mower mows a lawn enclosed by a boundary as a working area, and the outside of the lawn is defined as a non-working area.

In existing technologies, boundary wires are generally buried to calibrate a boundary of a lawn working area, which needs a lot of manpower and material resources and increases usage costs of a mobile robot. This method puts forward certain requirements for the burying of wires, for example, corners cannot be less than 90 degrees, which limits a shape of the lawn working area to some extent.

### Summary of the Invention

In order to solve the above technical problems, the objectives of the present invention are to provide a method and system for recognizing a working area based on an image, and a robot.

In order to achieve one of the above invention objectives, an embodiment of the present invention provides a method for recognizing a working area based on an image. The method includes: obtaining an original image;
separating an H channel image from the original image;
performing binarization processing on the original image to form a first binary image, where the first binary image includes a working area and a non-working area that have different pixel values;
collecting statistics on a histogram of the H channel image, and obtaining a first parameter representing a peak value of the histogram;
collecting statistics on a second parameter representing a size of the non-working area in the first binary image based on the first binary image; and
recognizing a working area according to magnitude relations of the first parameter and the second parameter with preset parameter thresholds.

Through the method, the current position of a robot may be accurately determined through image recognition, costs are saved, and the operational performance of the robot is improved.

As a further improvement on the embodiment of the present invention, the first parameter is a peak value maxH of the histogram of the H channel image; the second parameter is a quantity of pixel points N1 in the non-working area of the first binary image; and the preset parameter thresholds include a first preset value M1 and a first preset peak value H1, and/or includes a second preset value M2 and a second preset peak value H2;

The recognizing a working area according to magnitude relations of the first parameter and the second parameter with preset parameter thresholds includes:
if maxH>H1 and N1>M1 are satisfied simultaneously, determining as a non-working area; or
if maxH≤H2 and N1>M2 are satisfied simultaneously, determining as a non-working area, where
H1=H2, and M1<M2.

Through the above preferred embodiment, the current position of the robot is accurately recognized through specific rules by specifically defining the first parameter and the second parameter.

As a further improvement on the embodiment of the present invention, the method further includes:
inverting the first binary image to form a second binary image, where the second binary image includes a working area and a non-working area that have different pixel values;
obtaining, based on the second binary image, a minimum rectangular contour that encloses the non-working area in the second binary image;
obtaining a coordinate parameter value Y of the rectangular contour based on the second binary image; and
driving the robot to execute an obstacle avoidance logic if it is confirmed that the robot is currently in the non-working area and Y is greater than a preset coordinate value, where
a range of the preset coordinate value is [58%*(L2*W2), 66%*(L2*W2)], and L2 and W2 represent a length and a width of the second binary image respectively.

On the basis of recognizing the current position of the robot, whether the robot encounters obstacles is determined through image recognition, so as to improve work efficiency.

In order to achieve one of the above invention objectives, an embodiment of the present invention provides a method for recognizing a working area based on an image. The method includes:
obtaining an original image;
separating a V channel image from the original image, performing edge extraction on the V channel image to form an edge image, separating an H channel image from an HSV image, and collecting statistics on a histogram of the H channel image;
performing binarization processing on the original image to form a first binary image, and inverting the first binary image to form a second binary image, where the first binary image and the second binary image both include a working area and a non-working area that have different pixel values;
obtaining, based on the second binary image, a minimum rectangular contour that encloses the non-working area in the second binary image;
obtaining a first parameter representing a peak value of the histogram of the H channel image based on the H channel image;
based on the edge image, correspondingly collecting statistics on a third parameter representing roughness of the edge image within the non-working area enclosed by the rectangular contour;
obtaining fourth parameters representing attributes of the rectangular contour based on the second binary image; and
recognizing a working area according to magnitude relations of the first parameter, the third parameter, and the fourth parameters with preset parameter values.

The method can accurately determine the current position of a robot through image recognition, save costs, and improve operational performance of the robot.

As a further improvement on the embodiment of the present invention, the first parameter is a peak value maxH of the histogram of the H channel image; the third parameter is a ratio P1 of a quantity of edge pixel points in the edge image on the non-working area within the rectangular contour to a quantity of pixel points in the non-working area within the rectangular contour; the fourth parameters include a size DL of the rectangular contour, a quantity of pixel points N3 in the non-working area within the rectangular contour, and a ratio P2 of a quantity of pixel points in the working area to a quantity of pixel points in the non-working area within the rectangular contour; the size of the rectangular contour includes at least one of a diagonal length XL of the rectangular contour, a length LL of the rectangular contour, and a width WL of the rectangular contour;

The configured preset parameter thresholds include: a third preset peak value H3, a fourth preset peak value H4, a first preset ratio Q1, a first preset length value Le1, a third preset quantity M3, and a second preset ratio Q2;
and/or include: a third preset peak value H3, a fourth preset peak value H4, a first preset ratio Q1, a first preset length value Le1, a fourth preset quantity M4, and a third preset ratio Q3;
and/or include: a third preset peak value H3, a fourth preset peak value H4, a first preset ratio Q1, a first preset length value Le1, a fifth preset quantity M5, and a fourth preset ratio Q4;
and/or include: a third preset peak value H3, a fourth preset peak value H4, a first preset ratio Q1, a first preset length value Le1, a sixth preset quantity M6, and a fifth preset ratio Q5;
and/or include: a third preset peak value H3, a fourth preset peak value H4, a sixth preset ratio Q6, a first preset length value Le1, a sixth preset quantity M6, and a seventh preset ratio Q7.

The recognizing a working area according to magnitude relations of the first parameter, the third parameter, and the fourth parameters with preset parameter values includes:
if H3<maxH<H4, P1<Q1, DL>Le1, N3>M3, and P2<Q2 are satisfied simultaneously, determining as a non-working area; or
if H3<maxH<H4, P1<Q1, DL>Le1, N3>M4, and P2<Q3 are satisfied simultaneously, determining as a non-working area; or
if H3<maxH<H4, P1<Q1, DL>Le1, N3>M5, and P2<Q4 are satisfied simultaneously, determining as a non-working area; or
if H3<maxH<H4, P1<Q1, DL>Le1, N3>M6, and P2<Q5 are satisfied simultaneously, determining as a non-working area; or
if H3<maxH<H4, P1<Q6, DL>Le1, N3>M6, and P2<Q7 are satisfied simultaneously, determining as a non-working area, where
M3<M4<M5<M6, Q2<Q3<Q4<Q5<Q7, and Q1>Q6.

Through the foregoing preferred embodiment, the current position of the robot is accurately recognized through specific rules by specifically defining the first parameter, the third parameter, and the fourth parameters.

As a further improvement on the embodiment of the present invention, the first parameter is a peak value maxH of the histogram of the H channel image; the third parameter is a ratio P1 of a quantity of edge pixel points in the edge image on the non-working area within the rectangular contour to a quantity of pixel points in the non-working area within the rectangular contour; the fourth parameters include a size DL of the rectangular contour, a quantity of pixel points N3 in the non-working area within the rectangular contour, a ratio P2 of a quantity of pixel points in the working area to a quantity of pixel points in the non-working area within the rectangular contour, and a ratio P3 of a quantity of pixel points in the non-working area within the rectangular contour on the working area in the first binary image to a quantity of pixel points in the non-working area within the rectangular contour; the size of the rectangular contour includes at least one of a diagonal length XL of the rectangular contour, a length LL of the rectangular contour, and a width WL of the rectangular contour;

The preset parameter thresholds include: a fourth preset peak value H4, a fifth preset peak value H5, an eighth preset ratio Q8, a first preset length value Le1, a seventh preset quantity M7, a ninth preset ratio Q9, and a tenth preset ratio Q10;

The recognizing a working area according to magnitude relations of the first parameter, the third parameter, and the fourth parameters with preset parameter values includes:
ifH4<maxH<H5, P1<Q8, DL>Le1, N3>M7, P2<Q9, andP3<Q10 are satisfied simultaneously, determining as a non-working area.

Through the foregoing preferred embodiment, the current position of the robot is accurately recognized through specific rules by specifically defining the first parameter, the third parameter, and the fourth parameters.

As a further improvement on the embodiment of the present invention, the first parameter is a peak value maxH of the histogram of the H channel image; the third parameter is a ratio P1 of a quantity of edge pixel points in the edge image on the non-working area within the rectangular contour to a quantity of pixel points in the non-working area within the rectangular contour; the fourth parameters include a size DL of the rectangular contour, a ratio P2 of a quantity of pixel points in the working area to a quantity of pixel points in the non-working area within the rectangular contour, and a ratio P3 of a quantity of pixel points in the non-working area within the rectangular contour on the working area in the first binary image to a quantity of pixel points in the non-working area within the rectangular contour; the size of the rectangular contour includes at least one of a diagonal length XL of the rectangular contour, a length LL of the rectangular contour, and a width WL of the rectangular contour;

The preset parameter thresholds include: a fifth preset peak value H5, an eleventh preset ratio Q11, a first preset length value Le1, a twelfth preset ratio Q12, and a thirteenth preset ratio Q13;
and/or a fifth preset peak value H5, a fourteenth preset ratio Q14, a first preset length value Le1, a fifteenth preset ratio Q15, and a thirteenth preset ratio Q13;
and/or a fifth preset peak value H5, a sixteenth preset ratio Q16, a first preset length value Le1, a seventeenth preset ratio Q17, and a thirteenth preset ratio Q13.

The recognizing a working area according to magnitude relations of the first parameter, the third parameter, and the fourth parameters with preset parameter values includes:
if maxH≥H5, P1<Q11, DL>Le1, P2<Q12, and P3<Q13 are satisfied simultaneously, determining as a non-working area; or
if maxH≥H5, P1<Q14, DL>Le1, P2<Q15, and P3≥Q13 are satisfied simultaneously, determining as a non-working area; or
if maxH≥H5, P1<Q16, DL>Le1, P2<Q17, and P3≥Q13 are satisfied simultaneously, determining as a non-working area, where
Q11>Q14>Q16, Q12<Q15<Q17.

Through the foregoing preferred embodiment, the current position of the robot is accurately recognized through specific rules by specifically defining the first parameter, the third parameter, and the fourth parameters.

As a further improvement on the embodiment of the present invention, the first parameter is a peak value maxH of the histogram of the H channel image; the third parameter is a ratio P1 of a quantity of edge pixel points in the edge image on the non-working area within the rectangular contour to a quantity of pixel points in the non-working area within the rectangular contour; the fourth parameters include a width WL of the rectangular contour, a ratio P2 of a quantity of pixel points in the working area to a quantity of pixel points in the non-working area within the rectangular contour, and a ratio P3 of a quantity of pixel points in the non-working area within the rectangular contour on the working area in the first binary image to a quantity of pixel points in the non-working area within the rectangular contour;

The preset parameter thresholds include a fifth preset peak value H5, an eleventh preset ratio Q11, a third preset length value Le3, a twelfth preset ratio Q12, and a thirteenth preset ratio Q13;
and/or a fifth preset peak value H5, a fourteenth preset ratio Q14, a third preset length value Le3, a fifteenth preset ratio Q15, and a thirteenth preset ratio Q13;
and/or a fifth preset peak value H5, a sixteenth preset ratio Q16, a third preset length value Le3, a seventeenth preset ratio Q17, and a thirteenth preset ratio Q13.

The recognizing a working area according to magnitude relations of the first parameter, the third parameter, and the fourth parameters with preset parameter values includes:
if maxH≥H5, P1<Q11, WL>Le3, P2<Q12, and P3<Q13 are satisfied simultaneously, determining as a non-working area; or
if maxH≥H5, P1<Q14, WL>Le3, P2<Q15, and P3≥Q13 are satisfied simultaneously, determining as a non-working area; or
if maxH≥H5, P1<Q16, WL>Le3, P2<Q17, and P3≥Q13 are satisfied simultaneously, determining as a non-working area, where
Q11>Q14>Q16, Q12<Q15<Q17.

Through the foregoing preferred embodiment, the current position of the robot is accurately recognized through specific rules by specifically defining the first parameter, the third parameter, and the fourth parameters.

In order to achieve one of the above invention objectives, an embodiment of the present invention provides a system for recognizing a working area based on an image. The system includes:
an obtaining module, configured to obtain an original image;
a conversion module, configured to separate an H channel image from the original image; and
perform binarization processing on the original image to form a first binary image, where the first binary image includes a working area and a non-working area that have different pixel values; and
a parsing module, configured to collect statistics on a histogram of the H channel image, and obtain a first parameter representing a peak value of the histogram;
collect statistics on a second parameter representing a size of the non-working area in the first binary image based on the first binary image; and
recognize a working area according to magnitude relations of the first parameter and the second parameter with preset parameter thresholds.

The system can accurately determine the current position of a robot through image recognition, save costs, and improve operational performance of the robot.

In order to achieve one of the above invention objectives, an embodiment of the present invention provides a system for recognizing a working area based on an image. The system includes:
an obtaining module, configured to obtain an original image;
a conversion module, configured to separate a V channel image from the original image, perform edge extraction on the V channel image to form an edge image, separate an H channel image from an HSV image, and collect statistics on a histogram of the H channel image;
perform binarization processing on the original image to form a first binary image, and invert the first binary image to form a second binary image, where the first binary image and the second binary image both include a working area and a non-working area that have different pixel values; and
obtain, based on the second binary image, a minimum rectangular contour that encloses the non-working area in the second binary image; and
a parsing module, configured to obtain a first parameter representing a peak value of the histogram of the H channel image based on the H channel image;
based on the edge image, correspondingly collect statistics on a third parameter representing roughness of the edge image within the non-working area enclosed by the rectangular contour;
obtain fourth parameters representing attributes of the rectangular contour based on the second binary image; and
recognize a working area according to magnitude relations of the first parameter, the third parameter, and the fourth parameters with preset parameter values.

The system can accurately determine the current position of a robot through image recognition, save costs, and improve operational performance of the robot.

In order to achieve one of the above invention objectives, an embodiment of the present invention provides a robot, including a memory and a processor. The memory stores a computer program, and the processor implements the steps of the foregoing method for recognizing a working area based on an image when executing the computer program.

Compared with the prior art, the method and system for recognizing a working area based on an image, and the robot of the present invention can accurately recognize a working area through image recognition and save costs, and the operational performance of the robot can be improved.

### Brief Description of the Drawings

FIG. 1 is a schematic structural diagram of a robot mower system provided in the present invention;
FIG. 2 is a schematic flowchart of a method for recognizing a working area based on an image according to a first embodiment of the present invention;
FIG. 3 is a schematic flowchart of a method for recognizing a working area based on an image according to a second embodiment of the present invention; and
FIG. 4 is a schematic diagram of modules of a system for recognizing a working area based on an image provided in the present invention.

### Detailed Description of the Embodiments

The present invention will be described in detail below with reference to various embodiments shown in the accompanying drawings. However, these embodiments do not limit the present invention. Structures, methods, or functional transformations made by those of ordinary skill in the art based on these embodiments are all included within the protection scope of the present invention.

The robot system of the present invention may be a robot mower system, a robot cleaner system, a snow sweeper system, a leaf suction machine system, a golf course picker system, or the like. Each system may automatically travel in a working area and perform corresponding work. In specific examples of the present invention, the robot mower system is used as an example for detailed description. Correspondingly, the working area may be a lawn.

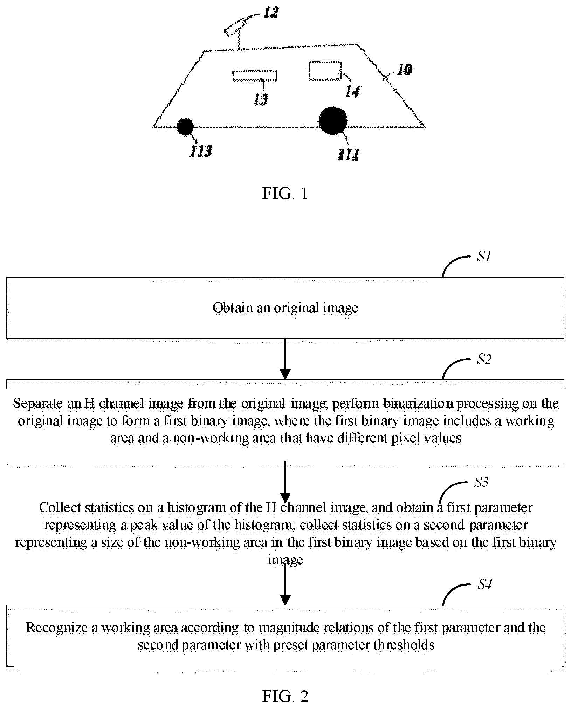

As shown in FIG. 1, the robot mower system of the present invention includes a robot mower (RM).

The robot mower includes: a body 10, and a traveling unit, an image capture unit and a control unit arranged on the body 10. The traveling unit includes: a driving wheel 111, a driven wheel 113, and a motor for driving the driving wheel 111; the motor may be a brushless motor with a reduction box and a Hall sensor; after the motor is started, the driving wheel 11 may be driven to travel by the reduction box, and may run straight forward and backward, turn on site, run in an arc manner, and the like by controlling the speed and direction of the two wheels; and the driven wheel 113 may be a universal wheel, the number of which is usually 1 or 2, for supporting balance.

The image capture unit is configured to capture a scenario within its viewing angle in a range, and is a camera 12 in the specific embodiment of the present invention. The camera 12 is installed at an upper part of the body 10, is at an angle with the horizontal direction, and may capture the scenario within a range of the robot mower; and the camera 12 usually captures the scenario within a range in front of the robot mower.

The control unit is a master controller 13 for image processing, such as MCU or DSP.

Further, the robot mower includes: a working mechanism for working and a power supply 14. In this embodiment, the working mechanism includes a mowing cutter head, and various sensors for sensing the traveling state of the traveling robot, such as toppling, ground clearance, collision and geomagnetic sensors and a gyroscope, which will not be described in detail here.

As shown in FIG. 2, a first embodiment of the present invention provides a method for recognizing a working position based on an image. The method includes the following steps:
S1. Obtain an original image;
S2. Separate an H channel image from the original image;

Perform binarization processing on the original image to form a first binary image, where the first binary image includes a working area and a non-working area that have different pixel values;
S3. Collect statistics on a histogram of the H channel image, and obtain a first parameter representing a peak value of the histogram;
Collect statistics on a second parameter representing a size of the non-working area in the first binary image based on the first binary image; and
S4. Recognize a working area according to magnitude relations of the first parameter and the second parameter with preset parameter thresholds.

In a specific embodiment of the present invention, for step S1, a scenario in front of a robot mower is captured in real time by a camera installed on the robot mower to form the original image; the scenario is a ground image in the advancing direction of the robot; further, after receiving the original image, the master controller parses the original image; thus, a working position at which the robot captures the original image may be determined through the original image, which will be described in detail in the following content. In the specific example, a format of the original image is not limited, for example, the original image is a color image in an RGB format or an HSV format.

For step S2, if the original image is in the RGB format, the original image in the RGB format is converted into an HSV image. If the original image is in the HSV format, the H channel image is directly separated from the HSV image without conversion. The implementation is the prior art and may be diverse, so details are not repeated here.

Binarization processing is performed on the original image to form a first binary image. From this, it may be known that pixel points in the binary image have only two gray values, for example, the two gray values are 0 and 255 respectively. The binarization processing is a process of presenting a clear black and white effect of the entire original image.

There are many implementations to perform binarization processing on the original image to form the first binary image. In a specific implementation of the present invention, the original image may be segmented to obtain a hue segmentation threshold [lowValue, high Value], pixel points within the segmentation threshold in the original image are converted to identical pixels, and pixel points outside the segmentation threshold are converted into another kind of pixels, to form the binary image. In the binary image, one kind of pixel value represents the working area, while the other kind of pixel value represents the non-working area.

The image segmentation method is, for example, dynamic color segmentation, edge texture segmentation, fixed threshold segmentation, or Otsu threshold segmentation.

The way of threshold matching is to transform each pixel point by setting the threshold range. In a specific example of the present invention, the pixel values of the pixel points within the threshold range are adjusted to 0, that is, the working area is adjusted to black; and the pixel values of the pixel points outside the threshold range are adjusted to 255, that is, the non-working area is adjusted to white.

For step S3, when the H channel image is known, the method of collecting statistics on a histogram of the H channel image is the prior art, and the implementation is diverse, so details are not repeated here.

In a preferred embodiment of the present invention, the first parameter representing the peak value of the histogram is obtained based on the histogram, where the specific representation of the first parameter is diverse. In a specific embodiment of the present invention, the first parameter is a peak value maxH of the histogram of the H channel image.

Correspondingly, the specific representation of the second parameter representing the size of the non-working area in the first binary image is also diverse. In a specific embodiment of the present invention, the second parameter is a quantity of pixel points N1 in the non-working area of the first binary image.

It should be noted that steps S2 and S3 above may be executed sequentially or alternately, for example, after the H channel image is obtained, the first parameter representing the peak value of the histogram is obtained. The execution order of steps S2 and S3 does not affect the final output result.

For step S4, the preset parameter thresholds include a first preset value M1 and a first preset peak value H1, and/or includes a second preset value M2 and a second preset peak value H2.

The recognizing a working area according to magnitude relations of the first parameter and the second parameter with preset parameter thresholds includes:
a. if maxH>H1 and N1>M1 are satisfied simultaneously, determining as a non-working area; or
b. if maxH≤H2 and N1>M2 are satisfied simultaneously, determining as a non-working area, where H 1 <H2 and M 1 <M2.

Preferably, the method includes: configuring H1=2.08%*(L1*W1) and N1=28.6%*(L1*W1); and/or configuring H2=2.08%*(L1*W1) and N2=41.6%*(L1*W1), where L1 and W1 represent a length and a width of the first binary image respectively.

In the first embodiment, a larger value of N1 indicates a larger non-working area of the image, a relatively scattered color distribution, and a low probability of concentration of a color.

In the method for recognizing a working area based on an image according to the first embodiment of the present invention, the working area may be directly recognized by comparing preset parameters with the peak value obtained from the H channel histogram and the quantity of pixel points N1 obtained from the first binary image, with low computational complexity and high computational accuracy, thereby improving the recognition and work efficiency of the robot.

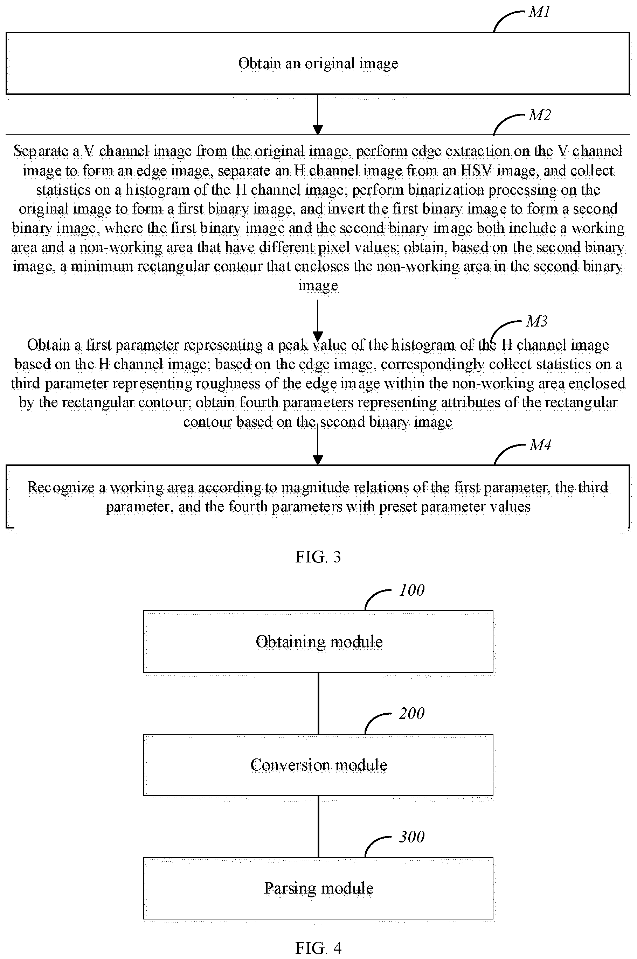

As shown in FIG. 3, a second embodiment of the present invention provides a method for recognizing a working area based on an image. The method includes:
M1. Obtain an original image;
M2. Separate a V channel image from the original image, perform edge extraction on the V channel image to form an edge image, separate an H channel image from an HSV image, and collect statistics on a histogram of the H channel image; perform binarization processing on the original image to form a first binary image, and invert the first binary image to form a second binary image, where the first binary image and the second binary image both include a working area and a non-working area that have different pixel values; obtain, based on the second binary image, a minimum rectangular contour that encloses the non-working area in the second binary image;
M3. Obtain a first parameter representing a peak value of the histogram of the H channel image based on the H channel image; based on the edge image, correspondingly collect statistics on a third parameter representing roughness of the edge image within the non-working area enclosed by the rectangular contour; obtain fourth parameters representing attributes of the rectangular contour based on the second binary image;
M4. Recognize a working area according to magnitude relations of the first parameter, the third parameter, and the fourth parameters with preset parameter values.

For step M2, the format of the original image is the same as that in the first embodiment described above. Separating the V channel image from the HSV image, separating the H channel image from the HSV image, and collecting statistics on the histogram of the H channel image are all existing technologies, and may be implemented in many ways, so details are not repeated here.

The performing edge extraction on the V channel image to form an edge image includes: filtering and normalizing the V channel image to remove noise from the V channel image, and then extracting edges of the de-noised image through an edge detection algorithm to form the edge image. Preferably, the edge detection algorithm is a canny algorithm.

The implementation of performing binarization processing on the original image to form a first binary image is the same as that in the first embodiment, and will not be repeated here.

Preferably, the inverting the first binary image to form a second binary image includes: performing inverting, opening, and closing operations on the first binary image sequentially to form the second binary image. The inverting, opening, and closing operations are all conventional image processing methods, and are also the prior art, so details are not repeated here. Here, it may be seen that the working area in the second binary image formed after inverting, opening, and closing the first binary image is not exactly the same as the non-working area in the first binary image.

It should be noted that steps M2 and M3 above may be executed sequentially or alternately, and changes in the execution order do not affect the final output result.

For step M4, in a first preferred embodiment of the present invention, the first parameter is a peak value maxH of the histogram of the H channel image; the third parameter is a ratio P1 of a quantity of edge pixel points in the edge image on the non-working area within the rectangular contour to a quantity of pixel points in the non-working area within the rectangular contour; the fourth parameters include a size DL of the rectangular contour, a quantity of pixel points N3 in the non-working area within the rectangular contour, and a ratio P2 of a quantity of pixel points in the working area to a quantity of pixel points in the non-working area within the rectangular contour; the size of the rectangular contour includes at least one of a diagonal length XL of the rectangular contour, a length LL of the rectangular contour, and a width WL of the rectangular contour;

Correspondingly, the configured preset parameter thresholds include: a third preset peak value H3, a fourth preset peak value H4, a first preset ratio Q1, a first preset length value Le1, a third preset quantity M3, and a second preset ratio Q2;
and/or include: a third preset peak value H3, a fourth preset peak value H4, a first preset ratio Q1, a first preset length value Le1, a fourth preset quantity M4, and a third preset ratio Q3;
and/or include: a third preset peak value H3, a fourth preset peak value H4, a first preset ratio Q1, a first preset length value Le1, a fifth preset quantity M5, and a fourth preset ratio Q4;
and/or include: a third preset peak value H3, a fourth preset peak value H4, a first preset ratio Q1, a first preset length value Le1, a sixth preset quantity M6, and a fifth preset ratio Q5;
and/or include: a third preset peak value H3, a fourth preset peak value H4, a sixth preset ratio Q6, a first preset length value Le1, a sixth preset quantity M6, and a seventh preset ratio Q7.

Further, the recognizing a working area according to magnitude relations of the first parameter, the third parameter, and the fourth parameters with preset parameter values includes:
c. if H3<maxH<H4, P1<Q1, DL>Le1, N3>M3, and P2<Q2 are satisfied simultaneously, determining as a non-working area; or
d. if H3<maxH<H4, P1<Q1, DL>Le1, N3>M4, and P2<Q3 are satisfied simultaneously, determining as a non-working area; or
e. if H3<maxH<H4, P1<Q1, DL>Le1, N3>M5, and P2<Q4 are satisfied simultaneously, determining as a non-working area; or
f. if H3<maxH<H4, P1<Q1, DL>Le1, N3>M6, and P2<Q5 are satisfied simultaneously, determining as a non-working area; or
g. if H3<maxH<H4, P1<Q6, DL>Le1, N3>M6, and P2<Q7 are satisfied simultaneously, determining as a non-working area;
where M3<M4<M5<M6, Q2<Q3<Q4<Q5<Q7, and Q1>Q6.

Preferably, for the first preferred embodiment of step M4, H3=1.56%*(L1*W1), H4=2.08%*(L1*W1), Q1=0.24, Le1 ∈ [50%^{∗}Lf1, 55%^{∗}Lf1], M3=18.2*(L2*W2), and Q2=0.01 are configured;
and/or H3=1.56%*(L1*W1), H4=2.08%*(L1*W1), Q1=0.24, Le1 E [50%^{∗}Lf1, 55%^{∗}Lf1], M4=26*(L2*W2), and Q3=0.011 are configured;
and/or H3=1.56%*(L1*W1), H4=2.08%*(L1*W1), Q1=0.24, Le1 ∈ [50%^{∗}Lf1, 55%^{∗}Lf1], M5=31.3*(L2*W2), and Q4=0.013 are configured;
and/or H3=1.56%^{∗}(L1^{∗}W1), H4=2.08%^{∗}(L1^{∗}W1), Q1=0.24, Le1 E [50%^{∗}Lf1, 55%^{∗}Lf1], M6=36.5*(L2*W2), and Q5=0.015 are configured;
and/or H3=1.56%*(L1*W1), H4=2.08%*(L1*W1), Q6=0.22, Le1 E [50%^{∗}Lf1, 55%^{∗}Lf1], M6=36.5*(L2*W2), and Q7=0.09 are configured;
where L1 and W1 represent a length and a width of the first binary image respectively, Lf1 represents a size of the second binary image, and if the size DL of the rectangular contour is the diagonal length XL of the rectangular contour, Lf1 represents a diagonal length of the second binary image; if the size DL of the rectangular contour is the length LL of the rectangular contour, Lf1 represents a length of the second binary image; if the size DL of the rectangular contour is the width WL of the rectangular contour, Lf1 represents a width of the second binary image; and L2 and W2 represent a length and a width of the second binary image respectively.

Preferably, a value of Le1 is 52.5^{∗}Lf1.

In the first preferred embodiment of step M4, both the size of the rectangular contour DL and the quantity of pixel points N3 in the non-working area within the rectangular contour may reflect a size of the area enclosed by the rectangular contour.

In addition, in this example, by comparing multiple groups of parameters from rules c to f, it may be known that a larger quantity of pixel points N3 in the non-working area within the rectangular contour indicates a larger non-working area range. Therefore, the requirement of the ratio P2 of the quantity of pixel points in the working area to the quantity of pixel points in the non-working area within the rectangular contour is reduced.

By comparing multiple groups of parameters in rules f and g, it may be known that a smaller ratio P1 of the quantity of edge pixel points in the edge image on the non-working area within the rectangular contour to the quantity of pixel points in the non-working area within the rectangular contour indicates a lower roughness and a smoother image. In this case, the conditions for the size of the working area within the rectangular contour are appropriately relaxed, that is, when the ratio P2 of the quantity of pixel points in the working area to the quantity of pixel points in the non-working area within the rectangular contour is larger, the robot may also be in a non-lawn area. In this implementation, when the roughness of the working area is higher than that of the non-working area, the non-working area with the lower roughness is at a higher probability.

For step M4, in a second preferred embodiment of the present invention, the first parameter is a peak value maxH of the histogram of the H channel image; the third parameter is a ratio P1 of a quantity of edge pixel points in the edge image on the non-working area within the rectangular contour to a quantity of pixel points in the non-working area within the rectangular contour; the fourth parameters include a size DL of the rectangular contour, a quantity of pixel points N3 in the non-working area within the rectangular contour, a ratio P2 of a quantity of pixel points in the working area to a quantity of pixel points in the non-working area within the rectangular contour, and a ratio P3 of a quantity of pixel points in the non-working area within the rectangular contour on the working area in the first binary image to a quantity of pixel points in the non-working area within the rectangular contour; the size of the rectangular contour includes at least one of a diagonal length XL of the rectangular contour, a length LL of the rectangular contour, and a width WL of the rectangular contour;

Correspondingly, the configured preset parameter thresholds include a fourth preset peak value H4, a fifth preset peak value H5, an eighth preset ratio Q8, a first preset length value Le1, a seventh preset quantity M7, a ninth preset ratio Q9, and a tenth preset ratio Q10;

Further, the recognizing a working area according to magnitude relations of the first parameter, the third parameter, and the fourth parameters with preset parameter values includes:
h. if H4<maxH<H5, P1<Q8, DL>Le1, N3>M7, P2<Q9, and P3<Q10 are satisfied simultaneously, determining as a non-working area.

Preferably, for the second preferred embodiment of step M4, H4=2.08%*(L1*W1), H5=2.86%*(L1*W1), Q8=0.27, Le1 ∈ [50%^{∗}Lf1, 55%^{∗}Lf1], M7=17.2*(L2*W2), Q9=0.01, and Q10=0.27 are configured, where L1 and W1 represent a length and a width of the first binary image respectively, Lf1 represents a size of the second binary image, and if the size DL of the rectangular contour is the diagonal length XL of the rectangular contour, Lf1 represents a diagonal length of the second binary image; if the size DL of the rectangular contour is the length LL of the rectangular contour, Lf1 represents a length of the second binary image; if the size DL of the rectangular contour is the width WL of the rectangular contour, Lf1 represents a width of the second binary image; and L2 and W2 represent a length and a width of the second binary image respectively.

Preferably, a value of Le1 is 52.5^{∗}Lf1.

For step M4, in a third preferred embodiment of the present invention, the first parameter is a peak value maxH of the histogram of the H channel image; the third parameter is a ratio P1 of a quantity of edge pixel points in the edge image on the non-working area within the rectangular contour to a quantity of pixel points in the non-working area within the rectangular contour; the fourth parameters include a size DL of the rectangular contour, a ratio P2 of a quantity of pixel points in the working area to a quantity of pixel points in the non-working area within the rectangular contour, and a ratio P3 of a quantity of pixel points in the non-working area within the rectangular contour on the working area in the first binary image to a quantity of pixel points in the non-working area within the rectangular contour; the size of the rectangular contour includes at least one of a diagonal length XL of the rectangular contour, a length LL of the rectangular contour, and a width WL of the rectangular contour;

The preset parameter thresholds include: a fifth preset peak value H5, an eleventh preset ratio Q11, a first preset length value Le1, a twelfth preset ratio Q12, and a thirteenth preset ratio Q13;
and/or a fifth preset peak value H5, a fourteenth preset ratio Q14, a first preset length value Le1, a fifteenth preset ratio Q15, and a thirteenth preset ratio Q13;
and/or a fifth preset peak value H5, a sixteenth preset ratio Q16, a first preset length value Le1, a seventeenth preset ratio Q17, and a thirteenth preset ratio Q13.

Further, the recognizing a working area according to magnitude relations of the first parameter, the third parameter, and the fourth parameters with preset parameter values includes:
i. if maxH≥H5, P1<Q11, DL>Le1, P2<Q12, and P3<Q13 are satisfied simultaneously, determining as a non-working area; or
j. if maxH≥H5, P 1 <Q 14, DL>Le1, P2<Q15, and P3≥Q13 are satisfied simultaneously, determining as a non-working area; or
k. if maxH≥H5, P1<Q16, DL>Le1, P2<Q17, and P3≥Q13 are satisfied simultaneously, determining as a non-working area;
where Q11>Q14>Q16, and Q12<Q15<Q17.

Preferably, H5=2.86%*(L1*W1), Q11=0.24, Le1 ∈ [50%^{∗}Lf1, 55%^{∗}Lf1], Q12=0.11, and Q13=0.4 are configured;
and/or H5=2.86%*(L1*W1), Q14=0.195, Le1 ∈ [50%^{∗}Lf1, 55%^{∗}Lf1], Q15=0.2, and Q13=0.4 are configured;
and/or H5=2.86%*(L1*W1), Q16=0.16, Le1 ∈ [50%^{∗}Lf1, 55%^{∗}Lf1], Q17=0.23, and Q13=0.4 are configured;
where L1 and W1 represent a length and a width of the first binary image respectively, Lf1 represents a size of the second binary image, and if the size DL of the rectangular contour is the diagonal length XL of the rectangular contour, Lf1 represents a diagonal length of the second binary image; if the size DL of the rectangular contour is the length LL of the rectangular contour, Lf1 represents a length of the second binary image; if the size DL of the rectangular contour is the width WL of the rectangular contour, Lf1 represents a width of the second binary image; and L2 and W2 represent a length and a width of the second binary image respectively.

Preferably, a value of Le1 is 52.5^{∗}Lf1.

In addition, in this example, by comparing multiple groups of parameters from rules h to k, it may be known that when the ratio P3 of the quantity of pixel points in the non-working area within the rectangular contour on the working area in the first binary image to the quantity of pixel points in the non-working area within the rectangular contour is larger, and the peak value maxH of the histogram of the H channel image is larger, it indicates that the image includes a larger working area, and correspondingly, the ratio P2 of the quantity of pixel points in the working area to the quantity of pixel points in the non-working area within the rectangular contour is also large. In this case, it may be determined whether the robot is in a non-lawn area through the ratio P1 of the quantity of edge pixel points in the edge image on the non-working area within the rectangular contour to the quantity of pixel points in the non-working area within the rectangular contour. A smaller value of P1 indicates a higher probability that the robot is in a non-working area.

Preferably, with regard to the method for recognizing a working area based on an image in the first and second embodiments described above, if it is confirmed that the robot is currently in a non-working area, the method further includes: obtaining a coordinate parameter value Y of the rectangular contour based on the second binary image; and driving the robot to execute an obstacle avoidance logic when Y is greater than a preset coordinate value, where a range of the preset coordinate value is [58%*(L2*W2), 66%*(L2*W2)], and L2 and W2 represent the length and width of the second binary image respectively.

Optionally, a value of Y is 62.5^{∗}(L2^{∗}W2).

Here, the coordinate parameter value Y may be a y-axis coordinate of a bottom right corner of the rectangular contour, a center position coordinate of the rectangular contour, or a mean value of Y values of pixel coordinates in the non-lawn area of the contour. Details are not repeated here.

It should be noted that in the method for recognizing a working area based on an image in the first embodiment, before obtaining the coordinate parameter value Y of the rectangular contour, the following steps need to be performed first: inverting the first binary image to form a second binary image, where the second binary image includes a working area and a non-working area that have different pixel values; and based on the second binary image, obtaining the minimum rectangular contour that encloses the non-working area in the second binary image. Preferably, the first binary image is sequentially inverted, opened, and closed to form the second binary image. For the method for recognizing a working area based on an image in the second embodiment, the second binary image has been obtained by conversion and the minimum rectangular contour that encloses the non-working area in the second binary image has been obtained in the previous steps. Therefore, the coordinate parameter value Y of the rectangular contour may be directly obtained on the basis of the second binary image, which will not be repeated here.

In one embodiment of the present invention, a robot is further provided, including a memory and a processor. The memory stores a computer program, and the processor implements the steps of the method for recognizing a working area based on an image described in any of the foregoing embodiments when executing the computer program.

As shown in FIG. 4, a system for recognizing a working area based on an image is provided. The system includes an obtaining module 100, a conversion module 200, and a parsing module 300.

For the system for recognizing a working area based on an image according to the first embodiment of the present invention, the obtaining module 100 is configured to obtain an original image; the conversion module 200 is configured to separate an H channel image from the original image, and perform binarization processing on the original image to form a first binary image, where the first binary image includes a working area and a non-working area that have different pixel values; and the parsing module 300 is configured to collect statistics on a histogram of the H channel image, obtain a first parameter representing a peak value of the histogram, collect statistics on a second parameter representing a size of the non-working area in the first binary image based on the first binary image, and recognize the working area according to magnitude relations of the first parameter and the second parameter with preset parameter thresholds.

Further, in the system for recognizing a working area based on an image in the first embodiment, the obtaining module 100 is configured to implement step S 1; the conversion module 200 is configured to implement step S2; and the parsing module 300 is configured to implement steps S3 and S4, and to perform computations for driving the robot to execute an obstacle avoidance logic. Those skilled in the art may clearly understand that, for the convenience and conciseness of the description, the specific working process of the system described above may refer to the corresponding process in the foregoing method embodiment, and details are not repeated here.

For the system for recognizing a working area based on an image according to the first embodiment of the present invention, the obtaining module 100 is configured to obtain an original image; the conversion module 200 is configured to separate a V channel image from the original image, perform edge extraction on the V channel image to form an edge image, separate an H channel image from an HSV image, and collect statistics on a histogram of the H channel image; perform binarization processing on the original image to form a first binary image, and invert the first binary image to form a second binary image, where the first binary image and the second binary image both include a working area and a non-working area that have different pixel values; and obtain, based on the second binary image, a minimum rectangular contour that encloses the non-working area in the second binary image; and the parsing module 300 is configured to obtain a first parameter representing a peak value of the histogram of the H channel image based on the H channel image; based on the edge image, correspondingly collect statistics on a third parameter representing roughness of the edge image within the non-working area enclosed by the rectangular contour; obtain fourth parameters representing attributes of the rectangular contour based on the second binary image; and recognize the working area according to magnitude relations of the first parameter, the third parameter, and the fourth parameters with preset parameter values.

Further, in the system for recognizing a working area based on an image in the second embodiment, the obtaining module 100 is configured to implement step M1; the conversion module 200 is configured to implement step M2; and the parsing module 300 is configured to implement steps M3 and M4, and to perform computations for driving the robot to execute an obstacle avoidance logic. Those skilled in the art may clearly understand that, for the convenience and conciseness of the description, the specific working process of the system described above may refer to the corresponding process in the foregoing method embodiment, and details are not repeated here.

In summary, the method and system for recognizing a working area based on an image, and the robot of the present invention can accurately recognize a working area through image recognition and save costs, and the operational performance of the robot can be improved.

In the several embodiments provided in the present application, it should be understood that the disclosed modules, systems and methods may all be implemented in other ways. The system embodiment described above is only illustrative. The division of the modules is only a logic function division, and other divisions may be used in practice. For example, a plurality of modules or components may be combined or integrated to another system, or some features may be neglected or not executed.

The modules described as separate components may be or may not be physically separated, and the components displayed as modules may be or may not be physical modules, that is, the components may be located at one place or may also be distributed on a plurality of network modules. Some or all of the modules may be selected according to actual requirements to achieve the objective of the solution in this embodiment.

In addition, each functional module in each embodiment of the present application may be integrated into one parsing module, or each module may exist physically alone, or two or more modules may be integrated into one module. The integrated modules may be implemented in the form of hardware, or may be implemented in the form of hardware plus software function modules.

Finally, it should be noted that the above embodiments are only used to illustrate the technical solutions of the present application, but not to limit them; although the present application is described in detail with reference to the foregoing embodiments, those of ordinary skill in the art should understand that modifications can still be made to the technical solutions described in the foregoing embodiments, or equivalent substitutions can be made to some of the technical features; and these modifications or substitutions do not make the essence of the corresponding technical solutions deviate from the spirit and scope of the technical solutions of the embodiments of the present application.

## Claims

1. A method for recognizing a working area based on an image, comprising:
obtaining an original image;
separating an H channel image from the original image;
performing binarization processing on the original image to form a first binary image, wherein the first binary image comprises a working area and a non-working area that have different pixel values;
collecting statistics on a histogram of the H channel image, and obtaining a first parameter representing a peak value of the histogram;
collecting statistics on a second parameter representing a size of the non-working area in the first binary image based on the first binary image; and
recognizing a working area according to magnitude relations of the first parameter and the second parameter with preset parameter thresholds.

2. The method for recognizing a working area based on an image according to claim 1, wherein the first parameter is a peak value maxH of the histogram of the H channel image; the second parameter is a quantity of pixel points N1 in the non-working area of the first binary image; the preset parameter thresholds comprise a first preset value M1 and a first preset peak value H1, and/or comprises a second preset value M2 and a second preset peak value H2; and
the recognizing a working area according to magnitude relations of the first parameter and the second parameter with preset parameter thresholds comprises:
if maxH>H1 and N1>M1 are satisfied simultaneously, determining as a non-working area; or
if maxH≤H2 and N1>M2 are satisfied simultaneously, determining as a non-working area, wherein
H1=H2, and M1<M2.

3. The method for recognizing a working area based on an image according to claim 1 or 2, wherein the method further comprises:
inverting the first binary image to form a second binary image, wherein the second binary image comprises a working area and a non-working area that have different pixel values;
obtaining, based on the second binary image, a minimum rectangular contour that encloses the non-working area in the second binary image;
obtaining a coordinate parameter value Y of the rectangular contour based on the second binary image; and
driving the robot to execute an obstacle avoidance logic if it is confirmed that the robot is currently in the non-working area and Y is greater than a preset coordinate value, wherein
a range of the preset coordinate value is [58%*(L2*W2), 66%*(L2*W2)], and L2 and W2 represent a length and a width of the second binary image respectively.

4. A method for recognizing a working area based on an image, comprising:
obtaining an original image;
separating a V channel image from the original image, performing edge extraction on the V channel image to form an edge image, separating an H channel image from an HSV image, and collecting statistics on a histogram of the H channel image;
performing binarization processing on the original image to form a first binary image, and inverting the first binary image to form a second binary image, wherein the first binary image and the second binary image both comprise a working area and a non-working area that have different pixel values;
obtaining, based on the second binary image, a minimum rectangular contour that encloses the non-working area in the second binary image;
obtaining a first parameter representing a peak value of the histogram of the H channel image based on the H channel image;
based on the edge image, correspondingly collecting statistics on a third parameter representing roughness of the edge image within the non-working area enclosed by the rectangular contour;
obtaining fourth parameters representing attributes of the rectangular contour based on the second binary image; and
recognizing a working area according to magnitude relations of the first parameter, the third parameter, and the fourth parameters with preset parameter values.

5. The method for recognizing a working area based on an image according to claim 4, wherein the first parameter is a peak value maxH of the histogram of the H channel image; the third parameter is a ratio P1 of a quantity of edge pixel points in the edge image on the non-working area within the rectangular contour to a quantity of pixel points in the non-working area within the rectangular contour; the fourth parameters comprise a size DL of the rectangular contour, a quantity of pixel points N3 in the non-working area within the rectangular contour, and a ratio P2 of a quantity of pixel points in the working area to a quantity of pixel points in the non-working area within the rectangular contour; the size of the rectangular contour comprises at least one of a diagonal length XL of the rectangular contour, a length LL of the rectangular contour, and a width WL of the rectangular contour;
the configured preset parameter thresholds comprise: a third preset peak value H3, a fourth preset peak value H4, a first preset ratio Q1, a first preset length value Le1, a third preset quantity M3, and a second preset ratio Q2;
and/or comprise: a third preset peak value H3, a fourth preset peak value H4, a first preset ratio Q1, a first preset length value Le1, a fourth preset quantity M4, and a third preset ratio Q3;
and/or comprise: a third preset peak value H3, a fourth preset peak value H4, a first preset ratio Q1, a first preset length value Le1, a fifth preset quantity M5, and a fourth preset ratio Q4;
and/or comprise: a third preset peak value H3, a fourth preset peak value H4, a first preset ratio Q1, a first preset length value Le1, a sixth preset quantity M6, and a fifth preset ratio Q5;
and/or comprise: a third preset peak value H3, a fourth preset peak value H4, a sixth preset ratio Q6, a first preset length value Le1, a sixth preset quantity M6, and a seventh preset ratio Q7;
the recognizing a working area according to magnitude relations of the first parameter, the third parameter, and the fourth parameters with preset parameter values comprises:
if H3<maxH<H4, P1<Q1, DL>Le1, N3>M3, and P2<Q2 are satisfied simultaneously, determining as a non-working area; or
if H3<maxH<H4, P1<Q1, DL>Le1, N3>M4, and P2<Q3 are satisfied simultaneously, determining as a non-working area; or
if H3<maxH<H4, P1<Q1, DL>Le1, N3>M5, and P2<Q4 are satisfied simultaneously, determining as a non-working area; or
if H3<maxH<H4, P1<Q1, DL>Le1, N3>M6, and P2<Q5 are satisfied simultaneously, determining as a non-working area; or
if H3<maxH<H4, P1<Q6, DL>Le1, N3>M6, and P2<Q7 are satisfied simultaneously, determining as a non-working area, wherein
M3<M4<M5<M6, Q2<Q3<Q4<Q5<Q7, and Q1>Q6.

6. The method for recognizing a working area based on an image according to claim 4, wherein the first parameter is a peak value maxH of the histogram of the H channel image; the third parameter is a ratio P1 of a quantity of edge pixel points in the edge image on the non-working area within the rectangular contour to a quantity of pixel points in the non-working area within the rectangular contour; the fourth parameters comprise a size DL of the rectangular contour, a quantity of pixel points N3 in the non-working area within the rectangular contour, a ratio P2 of a quantity of pixel points in the working area to a quantity of pixel points in the non-working area within the rectangular contour, and a ratio P3 of a quantity of pixel points in the non-working area within the rectangular contour on the working area in the first binary image to a quantity of pixel points in the non-working area within the rectangular contour; the size of the rectangular contour comprises at least one of a diagonal length XL of the rectangular contour, a length LL of the rectangular contour, and a width WL of the rectangular contour;
the preset parameter thresholds comprise: a fourth preset peak value H4, a fifth preset peak value H5, an eighth preset ratio Q8, a first preset length value Le1, a seventh preset quantity M7, a ninth preset ratio Q9, and a tenth preset ratio Q10;
the recognizing a working area according to magnitude relations of the first parameter, the third parameter, and the fourth parameters with preset parameter values comprises:
ifH4<maxH<H5, P1<Q8, DL>Le1, N3>M7, P2<Q9, andP3<Q10 are satisfied simultaneously, determining as a non-working area.

7. The method for recognizing a working area based on an image according to claim 4, wherein the first parameter is a peak value maxH of the histogram of the H channel image; the third parameter is a ratio P1 of a quantity of edge pixel points in the edge image on the non-working area within the rectangular contour to a quantity of pixel points in the non-working area within the rectangular contour; the fourth parameters comprise a size DL of the rectangular contour, a ratio P2 of a quantity of pixel points in the working area to a quantity of pixel points in the non-working area within the rectangular contour, and a ratio P3 of a quantity of pixel points in the non-working area within the rectangular contour on the working area in the first binary image to a quantity of pixel points in the non-working area within the rectangular contour; the size of the rectangular contour comprises at least one of a diagonal length XL of the rectangular contour, a length LL of the rectangular contour, and a width WL of the rectangular contour;
the preset parameter thresholds comprise: a fifth preset peak value H5, an eleventh preset ratio Q11, a first preset length value Le1, a twelfth preset ratio Q12, and a thirteenth preset ratio Q13;
and/or a fifth preset peak value H5, a fourteenth preset ratio Q14, a first preset length value Le1, a fifteenth preset ratio Q15, and a thirteenth preset ratio Q13;
and/or a fifth preset peak value H5, a sixteenth preset ratio Q16, a first preset length value Le1, a seventeenth preset ratio Q17, and a thirteenth preset ratio Q13;
the recognizing a working area according to magnitude relations of the first parameter, the third parameter, and the fourth parameters with preset parameter values comprises:
if maxH≥H5, P1<Q11, DL>Le1, P2<Q12, and P3<Q13 are satisfied simultaneously, determining as a non-working area; or
if maxH≥H5, P1<Q14, DL>Le1, P2<Q15, and P3≥Q13 are satisfied simultaneously, determining as a non-working area; or
if maxH≥H5, P1<Q16, DL>Le1, P2<Q17, and P3≥Q13 are satisfied simultaneously, determining as a non-working area, wherein
where Q11>Q14>Q16, and Q12<Q15<Q17.

8. A system for recognizing a working area based on an image, comprising:
an obtaining module, configured to obtain an original image;
a conversion module, configured to separate an H channel image from the original image; and
perform binarization processing on the original image to form a first binary image, wherein the first binary image comprises a working area and a non-working area that have different pixel values; and
a parsing module, configured to collect statistics on a histogram of the H channel image, and obtain a first parameter representing a peak value of the histogram;
collect statistics on a second parameter representing a size of the non-working area in the first binary image based on the first binary image; and
recognize a working area according to magnitude relations of the first parameter and the second parameter with preset parameter thresholds.

9. A system for recognizing a working area based on an image, comprising:
an obtaining module, configured to obtain an original image;
a conversion module, configured to separate a V channel image from the original image, perform edge extraction on the V channel image to form an edge image, separate an H channel image from an HSV image, and collect statistics on a histogram of the H channel image;
perform binarization processing on the original image to form a first binary image, and invert the first binary image to form a second binary image, wherein the first binary image and the second binary image both comprise a working area and a non-working area that have different pixel values; and
obtain, based on the second binary image, a minimum rectangular contour that encloses the non-working area in the second binary image; and
a parsing module, configured to obtain a first parameter representing a peak value of the histogram of the H channel image based on the H channel image;
based on the edge image, correspondingly collect statistics on a third parameter representing roughness of the edge image within the non-working area enclosed by the rectangular contour;
obtain fourth parameters representing attributes of the rectangular contour based on the second binary image; and
recognize a working area according to magnitude relations of the first parameter, the third parameter, and the fourth parameters with preset parameter values.

10. A robot, comprising a memory and a processor, the memory storing a computer program, wherein the processor implements the steps of the method for recognizing a working area based on an image according to any one of claims 1-7 when executing the computer program.
